# EUROPÄISCHE PATENTSCHRIFT

(11) **EP 2 834 531 B1**
(45) Veröffentlichungstag und Bekanntmachung des Hinweises auf die Patenterteilung: **23.01.2019**
(21) Anmeldenummer: 13709445.4
(22) Anmeldetag: 15.03.2013
(51) Int. Cl.: F16D 28/00, F16D 23/12, F16H 25/24, F16H 25/22

(54) **BETÄTIGUNGSVORRICHTUNG FÜR EINE KUPPLUNG**
ACTUATION DEVICE FOR A CLUTCH
DISPOSITIF D'ACTIONNEMENT POUR UN ACCOUPLEMENT

(30) Priorität: 03.04.2012 DE 102012205452
(43) Veröffentlichungstag der Anmeldung: 11.02.2015
(73) Patentinhaber: Schaeffler Technologies AG & Co. KG, 91074 Herzogenaurach (DE)
(72) Erfinder: OTT, Philippe, F-67110 Uttenhoffen (FR)
(86) Internationale Anmeldenummer: PCT/EP2013/055372
(87) Internationale Veröffentlichungsnummer: WO 2013/149806

(56) Entgegenhaltungen:
- WO-A1-01/65147
- DE-A1-102012 207 325
- JP-A- 2002 161 961
- US-A1- 2004 074 729
- US-A1- 2005 268 736
- US-A1- 2006 081 433

## Beschreibung

Die vorliegende Erfindung betrifft eine Betätigungsvorrichtung für eine Kupplung, insbesondere für eine Kraftfahrzeugkupplung, gemäß dem Oberbegriff des Anspruchs 1.

Aus der nicht vorveröffentlichten DE 10 2012 207 325 A1 ist eine Betätigungsvorrichtung für eine Kupplung mit einer Statoreinrichtung, einer bezüglich der Statoreinrichtung verdrehbaren Rotoreinrichtung und einer bezüglich der Rotoreinrichtung in axialer Richtung begrenzt verlagerbaren Schlitteneinrichtung bekannt. Zwischen der Rotoreinrichtung und der Schlitteneinrichtung ist ein Wälzkörpergewindetrieb mit einer Mehrzahl von Windungen und einem im Wesentlichen ringförmigen Wälzkörperumlauf mit Wälzkörpern vorgesehen. Der im Wesentlichen ringförmige Wälzkörperumlauf weist einen derart ausgebildeten Spurwechselbereich auf, dass Wälzkörper in Umfangsrichtung vor dem Spurwechselbereich zwischen einer ersten und einer zweiten Windung laufen, und Wälzkörper in Umfangsrichtung nach dem Spurwechselbereich zwischen der zweiten und einer dritten Windung laufen.

Aus der WO 01/65147 A1 ist eine Betätigungseinrichtung gemäß dem Oberbegriff des Anspruchs 1 bekannt.

Bisher ist die Herstellung des einteiligen, im Wesentlichen ringförmigen Wälzkörperumlaufs und insbesondere des Spurwechselbereichs sehr aufwendig und kostenintensiv. Insbesondere kommen dabei spanende Herstellverfahren zum Einsatz.

Es ist Aufgabe der vorliegenden Erfindung, eine Betätigungsvorrichtung für eine Kupplung anzugeben, die eine einfache Herstellung ermöglicht.

Diese Aufgabe wird mit den in Anspruch 1 angegebenen Maßnahmen gelöst.

Da der im Wesentlichen ringförmige Wälzkörperumlauf aus zumindest zwei Bauteilen ausgebildet ist, kann er auf einfache Art und Weise hergestellt werden.

Bevorzugte Ausführungsbeispiele der vorliegenden Erfindung sind in den abhängigen Ansprüchen dargelegt.

Insbesondere ist die Betätigungsvorrichtung für die Kupplung eines Kraftfahrzeugs ausgebildet. Bei der Kupplung handelt es sich insbesondere um eine Reibungskupplung, wie sie zwischen dem Verbrennungsmotor und/oder einem Elektromotor und dem Getriebe eines Kraftfahrzeugs für den Gangwechsel vorgesehen ist. Insbesondere kann die Betätigungsvorrichtung in Hybridfahrzeugen vorgesehen sein. Die Kupplung kann einerseits als Einzelkupplung ausgebildet sein, kann jedoch auch als Mehrfachkupplung, insbesondere als Doppelkupplung, ausgebildet sein. Bei einer Doppelkupplung sind vorzugsweise zwei Betätigungsvorrichtungen der vorgenannten Art vorzusehen.

Ferner kann die Kupplung sowohl als Trockenkupplung, als auch als Nasskupplung ausgebildet sein. Bei der Kupplung kann es sich einerseits um eine im betätigungsfreien Zustand eingerückte, das heißt normal-eingerückte Kupplung, oder andererseits um eine im betätigungsfreien Zustand ausgerückte, das heißt normal-ausgerückte Kupplung handeln. Bei einer normal-eingerückten Kupplung ist das Hebelelement, auf das die Betätigungsvorrichtung wirkt, üblicherweise als Tellerfeder ausgebildet, während bei einer normal-ausgerückten Kupplung das Hebelelement, auf das die Betätigungsvorrichtung wirkt, üblicherweise als Hebelfeder ausgebildet ist. Ferner kann die Kupplung einerseits als gedrückte Kupplung, das heißt als Kupplung, bei der die Betätigungsvorrichtung eine drückende Kraft auf das Hebelelement ausübt, oder andererseits als gezogene Kupplung, das heißt als Kupplung, bei der die Betätigungsvorrichtung eine ziehende Kraft auf das Hebelelement ausübt, ausgebildet sein.

Vorzugsweise bilden die Statoreinrichtung und die bezüglich der Statoreinrichtung verdrehbare Rotoreinrichtung einen Elektromotor. Der Elektromotor ist vorzugsweise als Drehstrommotor ausgebildet, bei dem Magnete, genauer gesagt Permanentmagnete, rotorseitig und wechselweise bestrombare Windungen statorseitig vorgesehen sind. Gemäß einem bevorzugten Ausführungsbeispiel ist der Elektromotor als Außenläufer ausgebildet, das heißt weist in seinem Inneren die Statoreinrichtung auf, die von der ringförmigen, drehbaren Rotoreinrichtung umgeben ist. Jedoch kann der Elektromotor auch als Innenläufer ausgebildet sein.

Die Betätigungsvorrichtung ist über eine Stromzufuhr bestrombar und vorzugsweise derart im Antriebsstrang des Kraftfahrzeugs gelagert, dass sie ausschließlich zum Einrücken und Ausrücken der Kupplung bestromt werden muss. Durch den Wälzkörpergewindetrieb, der in Wirkrichtung zwischen der Rotoreinrichtung und der Schlitteneinrichtung angeordnet ist, wird eine rotatorische Bewegung der Rotoreinrichtung in eine translatorische Bewegung der Schlitteneinrichtung umgesetzt. Der Wälzkörpergewindetrieb ist vorzugsweise selbsthemmend ausgebildet. Über ein Ausrücklager, das beispielsweise als Schrägkugellager ausgebildet ist, aber auch als Kegelrollenlager, Nadellager oder Gleitlager ausgebildet sein kann, kann die Schlitteneinrichtung unmittelbar oder mittelbar auf das Hebelelement der Kupplung wirken.

Beispielsweise kann die Statoreinrichtung drehfest mit einem Trägerabschnitt, insbesondere mit einem Gehäuseträger, ausgebildet sein, so dass die Stromzufuhr zur Statoreinrichtung mittels Kabel und ohne Drehdurchführung oder induktive Kopplung möglich ist. In radialer Richtung innerhalb der Statoreinrichtung verläuft die Eingangswelle der Kupplung bzw. die Abtriebswelle des Verbrennungsmotors. Die Eingangswelle ist bezüglich der Statoreinrichtung bzw. des Trägerabschnitts drehbar gelagert.

Jedoch ist es auch möglich, dass die Statoreinrichtung drehfest auf der Eingangswelle der Kupplung angeordnet ist, das heißt sich mit der Drehzahl des Verbrennungsmotors dreht. In diesem Fall ist eine Drehdurchführung oder eine induktive Kopplung zur Bestromung der Betätigungsvorrichtung erforderlich. Die Bestromung der Betätigungsvorrichtung in eine Richtung erzeugt im Vergleich zur Eingangsdrehzahl des Antriebsstrangs eine erhöhte Drehzahl der Rotoreinrichtung, wodurch die Kupplung ausgerückt wird. Die Bestromung der Betätigungsvorrichtung in die andere Richtung erzeugt einen im Vergleich zur Eingangsdrehzahl des Antriebsstrangs verringerte Drehzahl der Rotoreinrichtung, wodurch die Kupplung eingerückt wird. Daher kann der Ausrückvorgang der Kupplung über eine Beschleunigung der Rotoreinrichtung eingeleitet werden, während der Einrückvorgang der Kupplung über ein Abbremsen der Rotoreinrichtung eingeleitet wird. Ebenso ist es auch möglich, dass der Ausrückvorgang der Kupplung durch ein Abbremsen der Rotoreinrichtung eingeleitet wird, während der Einrückvorgang der Kupplung durch eine Beschleunigung der Rotoreinrichtung eingeleitet wird.

Gemäß einem bevorzugten Ausführungsbeispiel weist der Wälzkörpergewindetrieb eine Außenhülse auf, in die eine Formfeder eingesetzt ist, die eine Mehrzahl von Windungen aufweist. Die Formfeder ist insbesondere aus einem schraubenförmig gewundenen Federdraht ausgebildet, wobei in einer bevorzugten Ausgestaltung der gewundene Federdraht konturiert ist, das heißt in axialer Richtung auf beiden Seiten mit einer Anlagekontur versehen ist, die durch einen dazwischen liegenden Kamm getrennt ist. Die benachbarten Anlagekonturen zweier aufeinander folgender Windungen der Formfeder bilden einen Teil der Oberflächengeometrie des Wälzkörpers ab, so dass der jeweilige Wälzkörper in axialer Richtung in einer in Umfangsrichtung verlaufenden Spur zwischen zwei benachbarten Windungen der Formfeder geführt werden kann.

Die Außenhülse ist zur Lagerung der Formfeder mittels eines Deckels abgeschlossen, der mit der Außenhülse durch mehrere in Umfangsrichtung verteilt angeordnete Schrauben verschraubt ist. Zwischen dem Deckel und der Außenhülse ist vorzugsweise eine Ausgleichsscheibe vorgesehen. Ausgleichsscheiben gibt es in unterschiedlicher Stärke, um im Betrieb der Betätigungsvorrichtung einerseits die weitestgehende Spielfreiheit des Wälzkörpergewindetriebs in axialer Richtung und andererseits die Leichtgängigkeit und insbesondere die Klemmfreiheit des Wälzkörpergewindetriebs sicherzustellen. Mittels der passenden Ausgleichsscheibe ist daher beim Zusammenbau der Betätigungsvorrichtung die axiale Länge des Raums, in dem die schraubenförmige Formfeder angeordnet ist, exakt einzustellen.

Der Raum, in dem die Formfeder angeordnet ist, ist in axialer Richtung auf beiden Seiten durch jeweils eine Dichtung nach außen hin abgegrenzt. Jede der beiden Dichtungen, von denen eine außenhülsenseitig und die andere deckelseitig vorgesehen ist, ist gleitbeweglich mit jeweils einer Innenhülse in Anlage, um die translatorische Bewegung der Schlitteneinrichtung zu ermöglichen. Der Raum zwischen den beiden Dichtungen ist vorzugsweise mit Fett gefüllt, das heißt als Fettraum ausgebildet, um die Reibung des Wälzkörpergewindetriebs zu minimieren und ein Verklemmen der Wälzkörper zu verhindern.

Zusätzlich zum mit Wälzkörper gefüllten, ringförmigen Wälzkörperumlauf weist die Rotoreinrichtung ein Joch auf. Das Joch der Rotoreinrichtung ist drehbar über ein Stützlager, insbesondere über ein Radiallager, mittelbar oder unmittelbar an der Statoreinrichtung abgestützt. Das Joch und der ringförmige Wälzkörperumlauf sind vorzugsweise als separate Bauteile ausgebildet. Es ist jedoch auch möglich, dass eines der beiden Bauteile des Wälzkörperumlaufs einteilig mit dem Joch ausgebildet ist.

Wenn beide Bauteile des ringförmigen Wälzkörperumlaufs getrennt vom Joch ausgebildet sind, ist es von Vorteil, wenn das Joch als zweiteiliges Joch mit einer ersten Jochhülse und einer zweiten Jochhülse ausgebildet ist. Die beiden ringförmigen Bauteile des Wälzkörperumlaufs sind drehfest auf der ersten Jochhülse montiert. Die zweite Jochhülse ist ebenfalls drehfest auf der ersten Jochhülse montiert und stößt in axialer Richtung vorzugsweise an eines der beiden Bauteile des Wälzkörperumlaufs an. Insbesondere ist es von Vorteil, wenn zwischen einem Kragen der zweiten Jochhülse und einem Kragen der ersten Jochhülse das Stützlager vorgesehen ist, mittels dessen das Joch an der Statoreinrichtung abgestützt ist.

Zur drehfesten Verbindung können das oder die Bauteile des ringförmigen Wälzkörperumlaufs stoffschlüssig, beispielsweise durch Schweißen, Löten oder Kleben, mit dem Joch bzw. der ersten Jochhülse verbunden sein. Alternativ oder zusätzlich können das oder die Bauteile des ringförmigen Wälzkörperumlaufs formschlüssig, beispielsweise mittels einer Steckverzahnung oder einer Passfeder, mit dem Joch bzw. der ersten Jochhülse verbunden sein. Alternativ oder zusätzlich können das oder die Bauteile des ringförmigen Wälzkörperumlaufs kraftschlüssig, beispielsweise durch Verpressen oder Aufschrumpfen, mit dem Joch bzw. der ersten Jochhülse verbunden sein.

Die zwei Bauteile des Wälzkörperumlaufs sind als Ringe ausgebildet. Die beiden Ringe weisen vorzugsweise denselben Durchmesser auf. Jeder der beiden Ringe weist vorzugsweise einen Teil des Spurwechselbereichs auf.

Gemäß einem weiteren bevorzugten Ausführungsbeispiel ist zwischen den zwei Bauteilen des Wälzkörperumlaufs eine Trennebene definiert, die sich im Wesentlichen in radialer Richtung erstreckt. Im Wesentlichen in radialer Richtung bedeutet in diesem Zusammenhang, dass die Trennebene auch leicht zu einer Radialebene, von der die Drehachse der Betätigungsvorrichtung senkrecht durchstoßen wird, geneigt sein kann. Ferner kann die Trennebene durch eine Schraubenkontur definiert sein und insbesondere im Spurwechselbereich des Wälzkörperumlaufs einen Sprungabschnitt aufweisen.

Gemäß einem weiteren bevorzugten Ausführungsbeispiel weist der Wälzkörperumlauf eine in Umfangsrichtung umlaufende Wälzkörperrinne auf. Die Wälzkörperrinne ist mit mehreren Wälzkörpern gefüllt.

In einem bevorzugten Ausführungsbeispiel ist bei einem als Außenläufer ausgebildeten Elektromotor der Wälzkörperumlauf im Außenumfang der Rotoreinrichtung angeordnet, während dementsprechend die Formfeder, zwischen deren Windungen die Wälzkörper laufen, radial außerhalb angeordnet und als innenkonturierte Formfeder ausgebildet ist, wobei sowohl der Kamm, als auch die Anlagekonturen für die Wälzkörper in radialer Richtung nach innen weisen. Dementsprechend weisen die beiden ringförmigen Bauteile des Wälzkörperumlaufs die Wälzkörperrinne in ihrem Außenumfang auf. Jedoch ist es auch möglich, beispielsweise bei der Ausbildung des Elektromotors als Innenläufer, den Wälzkörperumlauf im Innenumfang einer Rotoreinrichtung vorzusehen, und dementsprechend die Formfeder radial innerhalb anzuordnen und als außenkonturierte Formfeder auszubilden. Dementsprechend weisen die beiden ringfömrigen Bauteile des Wälzkörperumlaufs in ihrem Innenumfang die Wälzkörperrinne auf.

Insbesondere ist es von Vorteil, wenn die Trennebene durch die Wälzkörperrinne, vorzugsweise durch die gesamte Wälzkörperrinne, verläuft. Auf diese Art und Weise sind die beiden Bauteile, und insbesondere die Abschnitte der Wälzkörperrinne innerhalb der beiden Bauteile, umformtechnisch bzw. werkzeugfallend herstellbar.

Es ist von Vorteil, wenn die Wälzkörperrinne den Spurwechselbereich und zumindest einen im Wesentlichen schraubengewindeförmigen Tragbereich aufweist. Die Steigung des schraubengewindeförmigen Tragbereichs entspricht einer Spur zwischen der ersten und zweiten Windung der Formfeder, in der die Wälzkörper laufen. Der Spurwechselbereich definiert die Sprungstelle der Trennebene und die Stelle, an der die Wälzkörper in die nächste Spur, das heißt in die Spur zwischen der zweiten und der dritten Windung der Formfeder hinüber wechseln.

Insbesondere ist es von Vorteil, wenn die Trennebene in axialer Richtung mittig durch den Spurwechselbereich der Wälzkörperrinne und den Tragbereich der Wälzkörperrinne verläuft. Auf diese Art und Weise ist der Wälzkörperumlauf umformtechnisch herstellbar, ohne dass eine abschließende Zerspanung erforderlich ist.

Gemäß einem bevorzugten Ausführungsbeispiel sind die zwei Bauteile des Wälzkörperumlaufs, und vorzugsweise die Wälzkörperrinne, umformtechnisch hergestellt.

Es ist von Vorteil, wenn die Wälzkörper als Kugeln ausgebildet sind, und die Wälzkörperrinne als umlaufende Kugelrinne ausgebildet ist. Im Tragbereich ist die Kugelrinne vorzugsweise im Wesentlichen U-förmig ausgebildet, wobei die Kugeln im Wesentlichen mit der Hälfte ihres Durchmessers in radialer Richtung der Betätigungsvorrichtung in die Kugelrinne eintauchen.

Weiterhin ist es von Vorteil, wenn die Tiefe des Spurwechselbereichs im Wesentlichen gleich dem, vorzugsweise größer als der Durchmesser der, Kugeln ist. Dies bedeutet, dass im Spurwechselbereich die Kugeln in radialer Richtung der Betätigungsvorrichtung zumindest nahezu vollständig in die Kugelrinne eintauchen können. Die Eintauchtiefe muss mindestens so groß sein, dass die Kugeln von der zwischen der in axialer Richtung der Betätigungsvorrichtung zwischen der ersten und zweiten Windung angeordneten Spur zu der in axialer Richtung zwischen der zweiten und dritten Windung angeordneten Spur wechseln können, ohne dabei die zweite Windung, insbesondere den Kamm der Formfeder im Bereich der zweiten Windung, zu berühren. Dies sollte auch sichergestellt sein, wenn die Schlitteneinrichtung während des Betriebs der Betätigungsvorrichtung verkippt, so dass es insbesondere von Vorteil ist, wenn die Kugeln im Spurwechselbereich vollständig in die Kugelrinne eintauchen können, das heißt, wenn der Durchmesser der Kugeln zumindest der Tiefe des Spurwechselbereichs in radialer Richtung der Betätigungsvorrichtung entspricht. Vorzugsweise ist der Durchmesser kleiner als die Tiefe des Spurwechselbereichs.

Die vorliegende Erfindung wird nachfolgend anhand von bevorzugten Ausführungsbeispielen in Verbindung mit den zugehörigen Figuren näher erläutert. In diesen zeigen:
- Figur 1: ein Ausführungsbeispiel einer Betätigungsvorrichtung für eine Kupplung in einer Schnittansicht,
- Figur 2: einen Wälzkörpergewindetrieb der Betätigungsvorrichtung aus Figur 1 in einer Seitenansicht,
- Figur 3: eine Detailansicht eines Wälzkörperumlaufs der Betätigungsvorrichtung aus Figur 1 in einem Tragbereich,
- Figur 4: ein erstes Ausführungsbeispiel eines Jochs mit Wälzkörperumlauf für die Betätigungsvorrichtung aus Figur 1 in einer perspektivischen Schnittansicht,
- Figur 5: zwei ringförmige Bauteile des Wälzkörperumlaufs aus Figur 4 in einer Schnittansicht,
- Figur 6: eines der beiden ringförmigen Bauteile des Wälzkörperumlaufs aus Figur 4 in einer perspektivischen Ansicht,
- Figur 7: ein zweites Ausführungsbeispiel zweier ringförmiger Bauteile eines Wälzkörperumlaufs in einer Schnittansicht, und
- Figur 8: die zwei ringförmigen Bauteile des Wälzkörperumlaufs aus Figur 7 in einer perspektivischen Ansicht.

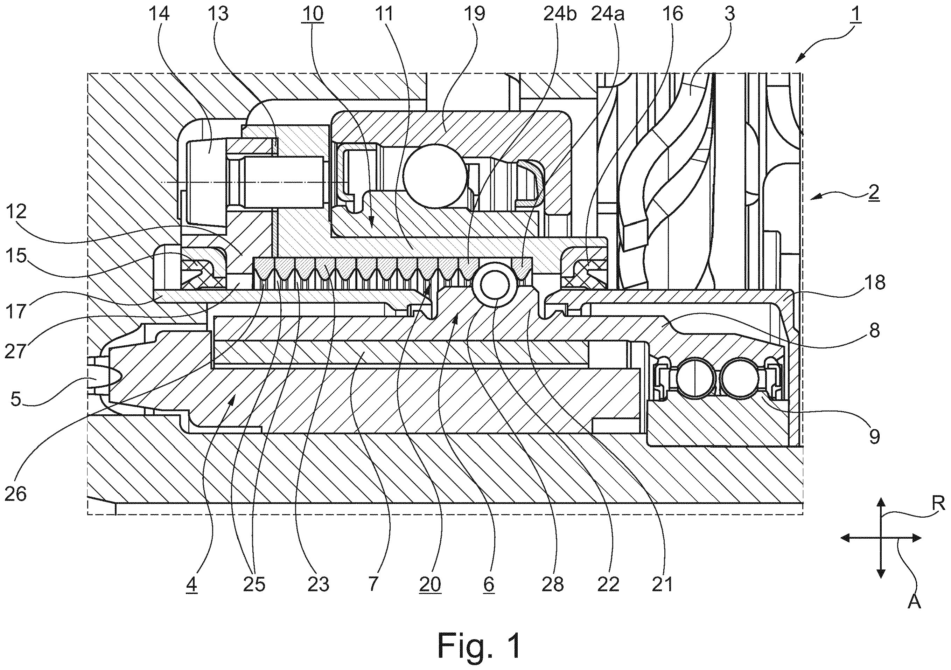

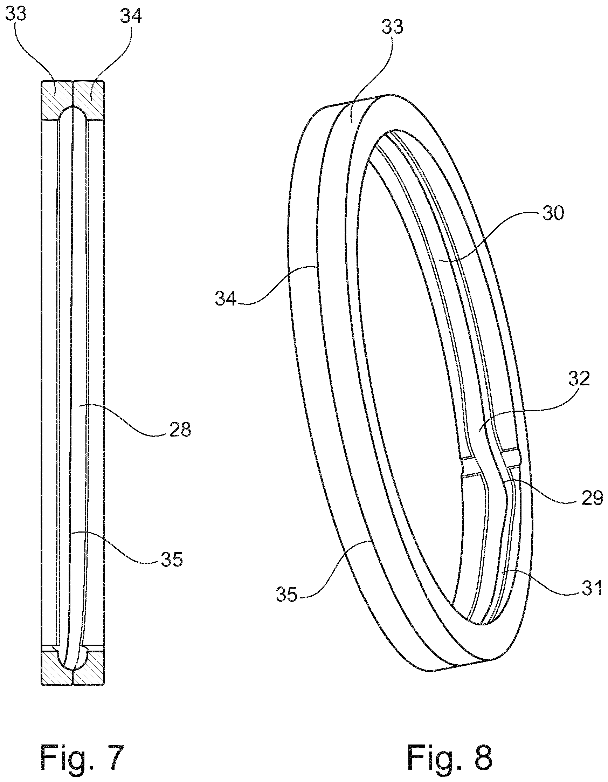

Die Figuren 1 bis 6 betreffen ein erstes Ausführungsbeispiel einer Betätigungsvorrichtung 1 für eine Kupplung 2, insbesondere für einen Antriebsstrang eines Kraftfahrzeugs. Die Figuren 7 und 8 betreffen ein zweites Ausführungsbeispiel einer solchen Betätigungsvorrichtung 1 für eine Kupplung 2. Merkmale, die in der vorliegenden Beschreibung nicht als erfindungswesentlich gekennzeichnet sind, sind als optional zu verstehen. Daher betrifft die nachfolgende Beschreibung auch weitere Ausführungsbeispiele der Betätigungsvorrichtung 1, die Teilkombinationen der im Folgenden zu erläuternden Merkmale aufweisen. Ebenso betrifft die nachfolgende Beschreibung die Kombination bzw. den Zusammenbau der Betätigungsvorrichtung 1 mit der Kupplung 2, insbesondere im Antriebsstrang eines Kraftfahrzeugs.

Die Kupplung 2 ist drehbar um eine Drehachse Z gelagert und weist zumindest eine nicht dargestellte Anpressplatte, zumindest eine nicht dargestellte Gegendruckplatte und zumindest eine in axialer Richtung A der Kupplung 2 zwischen der Anpressplatte und der Gegendruckplatte angeordnete, nicht dargestellte Kupplungsscheibe auf. Die Gegendruckplatte ist mit einem Gehäusebauteil der Kupplung 2, insbesondere einem Kupplungsdeckel, fest verbunden, insbesondere verschraubt. Die Anpressplatte ist im Kupplungsgehäuse, insbesondere innerhalb des Kupplungsdeckels, drehfest gelagert und in axialer Richtung A begrenzt verlagerbar. Insbesondere ist die Anpressplatte mittels mehrerer nicht dargestellter Blattfedern drehfest im Kupplungsgehäuse befestigt und von der Gegendruckplatte weg vorgespannt.

Darüber hinaus weist die Kupplung 2 ein Hebelelement 3 auf, das für eine normal-eingerückte Kupplung 2 als Tellerfeder und für eine normal-ausgerückte Kupplung 2 als Hebelfeder ausgebildet sein kann. Das Hebelelement 3 ist gehäuseseitig abgestützt und durch die Betätigungsvorrichtung 1 betätigbar. Die gehäuseseitige Abstützung kann beispielsweise durch eine am Kupplungsdeckel befestigte, nicht dargestellte Lagereinheit erfolgen, durch die das Hebelelement 3 verkippbar aufgehängt ist. Hierzu weist die Lagereinheit beispielsweise zwei in axialer Richtung A beabstandete Drahtringe auf, zwischen denen das Hebelelement 3 sich in radialer Richtung R der Kupplung 2 erstreckt. Über Hebelspitzen, die in radialer Richtung R auf der Innenseite des vorzugsweise im Wesentlichen ringförmig ausgebildeten Hebelelements 3 angeordnet sind, ist das Hebelelement 3 durch die Betätigungsvorrichtung 1 betätigbar.

Bei einer normal-eingerückten Kupplung 2 überwiegt die wirksame Kraft des als Tellerfeder ausgebildeten Hebelelements 3 die Gegenkraft der Blattfedern, während bei einer normalausgerückten Kupplung 2 die Gegenkraft der Blattfedern die wirksame Kraft des als Hebelfeder ausgebildeten Hebelelements 3 überwiegt. Dementsprechend führt eine Betätigung der Tellerfeder der normal-eingerückten Kupplung 2 durch die Betätigungsvorrichtung 1 zum Ausrücken der Kupplung 2 durch Verkippen bzw. Umschnappen der Tellerfeder, das heißt zum Abhub der Anpressplatte und zur Entfernung der Anpressplatte von der Gegendruckplatte, während eine Betätigung der Hebelfeder bei einer normal-ausgerückten Kupplung 2 durch die Betätigungsvorrichtung 1 zum Einrücken der Kupplung 2 durch Verkippen der Hebelfeder führt.

Bei eingerückter Kupplung 2 wird ein Drehmoment von der Eingangsseite der Kupplung 2, beispielsweise von einem Zweimassenschwungrad oder einem Verbrennungsmotor oder einem Elektromotor, über das Kupplungsgehäuse und sowohl die Gegendruckplatte als auch die Anpressplatte, die beide mit dem Kupplungsgehäuse, insbesondere dem Kupplungsdeckel, drehfest verbunden sind, reibschlüssig auf die Kupplungsscheibe übertragen. Von der Kupplungsscheibe, die reibschlüssig zwischen der Gegendruckplatte und der Anpressplatte geklemmt ist, wird das Drehmoment zur Ausgangsseite der Kupplung 2 übertragen, beispielsweise zu einer Eingangswelle eines Getriebes.

Da aufgrund des Reibschlusses sowohl die Reibbeläge der Kupplungsscheibe, als auch in geringerem Maße die Reibfläche der Gegendruckplatte und der Anpressplatte einem Verschleiß unterworfen sind, muss über die Lebensdauer der Kupplung 2 die Anpressplatte immer näher an die Gegendruckplatte heranbewegt werden, um die Abnahme der Dicke der Reibbeläge und der Stärke der Reibflächen in axialer Richtung A zu kompensieren und den Reibschluss herstellen bzw. die Kupplung 2 einrücken zu können. Hierzu ist in der Kupplung 2 beispielsweise eine nicht dargestellte, kraftbasierte oder wegbasierte Verschleißnachstelleinrichtung vorgesehen.

Die Betätigungsvorrichtung 1, die auf das Hebelelement 3 der Kupplung 2 wirkt, weist eine Statoreinrichtung 4 und eine bezüglich der Statoreinrichtung 4 verdrehbare Rotoreinrichtung 6 auf. Beispielsweise kann die Statoreinrichtung 4 drehfest mit einem Trägerabschnitt, insbesondere mit einem Gehäuseträger, ausgebildet sein. Vorzugsweise bilden die Statoreinrichtung 4 und die Rotoreinrichtung 6 einen Elektromotor, insbesondere einen Drehstrommotor. Hierzu ist die Statoreinrichtung 4 mit einer Stromzufuhr 5 versehen, um in nicht dargestellten, statorseitigen Spulen ein wechselndes elektromagnetisches Feld zu erzeugen. Die Rotoreinrichtung 6 weist zur magnetischen Wechselwirkung mit den statorseitigen Elektromagneten Magnete 7, genauer gesagt Permanentmagnete, auf.

Vorzugsweise ist der Elektromotor als sogenannter Außenläufer ausgebildet, das heißt die Statoreinrichtung 4 ist in radialer Richtung R der Betätigungsvorrichtung 1 bzw. der Kupplung 2 innerhalb der Rotoreinrichtung 6 angeordnet. Es ist jedoch auch möglich, den Elektromotor als Innenläufer auszubilden, das heißt, die Statoreinrichtung 4 in radialer Richtung R außerhalb der Rotoreinrichtung 6 anzuordnen. Auf diese Anordnung wird mit Bezug auf die Figuren 7 und 8 noch genauer eingegangen.

Die in Figur 1 dargestellte Rotoreinrichtung 6 weist ein Joch 8 auf, das auf Seiten der Kupplung 2, das heißt mit Bezug auf Figur 1 auf der rechten Seite, in radialer Richtung R durch ein Stützlager 9 abgestützt ist. Somit ist im dargestellten Ausführungsbeispiel das Stützlager 9 in axialer Richtung A der Betätigungsvorrichtung 1 bzw. der Kupplung 2 auf der entgegengesetzten Seite der Stromzufuhr 5 für die Statoreinrichtung 4 angeordnet. Das Stützlager 9 kann mittelbar oder unmittelbar mit der Statoreinrichtung 4 verbunden sein. Das Stützlager 9 ist vorzugsweise als Wälzlager, insbesondere als Kugellager, vorzugsweise wie dargestellt als Doppelkugellager, ausgebildet. Jedoch ist auch ein Nadellager oder ein Gleitlager möglich.

Zusätzlich zur Statoreinrichtung 4 und zur Rotoreinrichtung 6 weist die Betätigungsvorrichtung 1 eine bezüglich der Rotoreinrichtung 6 in axialer Richtung A begrenzt verlagerbare Schlitteneinrichtung 10 auf. Die Schlitteneinrichtung 10 ist in radialer Richtung R außerhalb der Rotoreinrichtung 6 angeordnet. Die Schlitteneinrichtung 10 weist eine Außenhülse 11 auf, die auf Seiten der Stromzufuhr 5 für die Statoreinrichtung 4, das heißt mit Bezug auf Figur 1 auf der linken Seite, durch einen Deckel 12 abgeschlossen ist. In axialer Richtung A zwischen der Außenhülse 11 und dem Deckel 12 ist eine Ausgleichsscheibe 13 angeordnet, um die axiale Länge des durch die Außenhülse 11 und den Deckel 12 begrenzten Bauraums für eine Formfeder 23 eines Wälzkörpergewindetriebs 20, auf den nachfolgend noch eingegangen wird, zu definieren und einzustellen. Mittels mehrerer in Umfangsrichtung U der Betätigungsvorrichtung 1 bzw. der Kupplung 2 angeordneter Schrauben 14 ist der Deckel 12 durch die Ausgleichsscheibe 13 hindurch mit der Außenhülse 11 verschraubt.

In axialer Richtung A auf beiden Seiten der Schlitteneinrichtung 10 ist jeweils eine Dichtung 15, 16 vorgesehen, die den Raum, in dem die Formfeder 23 des Wälzkörpergewindetriebs 20 angeordnet ist, nach außen hin abdichtet. Die ersten und zweiten Dichtungen 15, 16 sind beispielsweise als Lippendichtungen aus einem Elastomer oder einem gummi- bzw. kautschukhaltigen Material ausgebildet. In radialer Richtung R innerhalb ist die erste Dichtung 15 in gleitbeweglicher Anlage an einer ersten Innenhülse 17, während die zweite Dichtung 16 in gleitbeweglicher Anlage an einer zweiten Innenhülse 18 ist. Beide Innenhülsen 17, 18 sind mittelbar oder unmittelbar, vorzugsweise drehfest, mit der Statoreinrichtung 4 bzw. dem Trägerabschnitt, insbesondere dem Gehäuseträger, verbunden. Durch die Innenhülsen 17, 18, die Dichtungen 15, 16, den Deckel 12 und die Außenhülse 11 wird ein Fettraum 27 gebildet, in dem die Formfeder 23 des Wälzkörpergewindetriebs 20 angeordnet ist.

In radialer Richtung R außerhalb der Außenhülse 11 ist ein Ausrücklager 19 vorgesehen. Das Ausrücklager 19 ist im dargestellten Ausführungsbeispiel als Schrägkugellager ausgebildet, kann beispielsweise jedoch auch als Kegelrollenlager, Nadellager oder Gleitlager ausgebildet sein. Über das Ausrücklager 19 und/oder die Außenhülse 11 wirkt die Schlitteneinrichtung 10 mittelbar oder unmittelbar auf die in radialer Richtung R innenliegenden Zungen des Hebelelements 3, um die Kupplung 2 auszurücken bzw. auszurücken.

Der Wälzkörpergewindetrieb 20 ist vorzugsweise in radialer Richtung R zwischen der Rotoreinrichtung 6 und der Schlitteneinrichtung 10 angeordnet. Im dargestellten Ausführungsbeispiel umfasst die Formfeder 23 des Wälzkörpergewindetriebs 20 zwölf Windungen, wobei prinzipiell jede Windungszahl größer/gleich 3 möglich ist.

Zusätzlich zur Formfeder 23 weist der Wälzkörpergewindetrieb 20 einen Wälzkörperumlauf 21 auf, in dem, vorzugsweise über den gesamten Umfang verteilt, Wälzkörper 22 in einer Reihe, oder gegebenenfalls auch in mehreren, in axialer Richtung A voneinander beabstandeten Reihen, angeordnet sind. Der Wälzkörperumlauf 21 weist eine Wälzkörperrinne 28 auf und ist in Abweichung zur Darstellung in Figur 1 nicht einteilig mit der Rotoreinrichtung 6 bzw. dem Joch 8 ausgebildet, sondern weist zumindest zwei Bauteile 33, 34 auf.

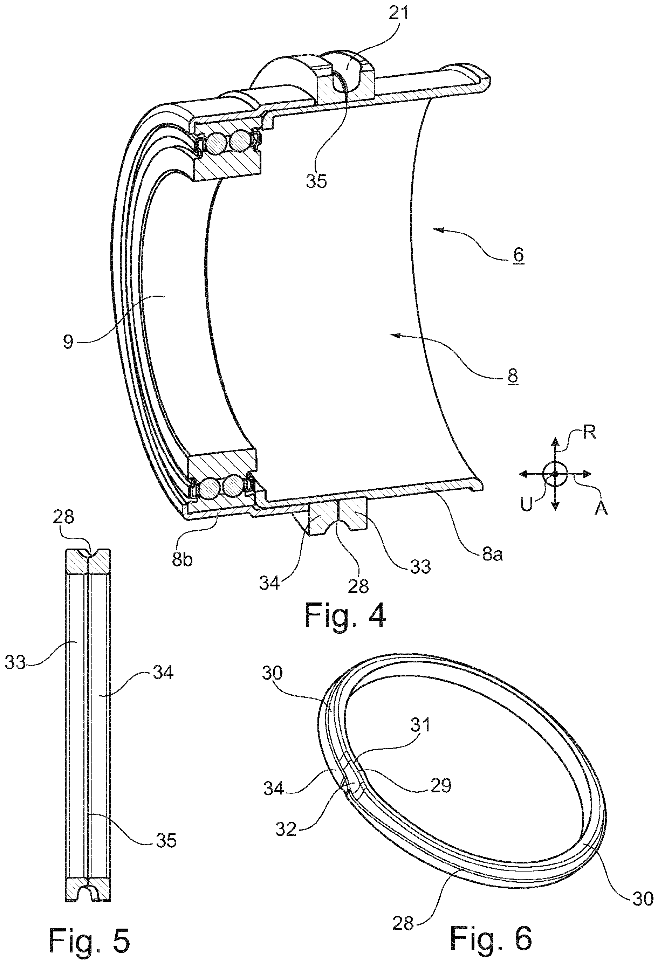

In den Figuren 4 bis 6 ist der ringförmige Wälzkörperumlauf 21 im Außenumfang der Jocheinrichtung 6 bzw. des Jochs 8 angeordnet. Die Wälzkörperrinne 28 ist im Außenumfang des Wälzkörperumlaufs 21 bzw. der zwei Bauteile 33, 34 ausgebildet. Die zwei Bauteile 33, 34 des Wälzkörperumlaufs 21 sind als Ringe ausgebildet. Beide ringförmigen Bauteile 33, 34 sind drehfest mit dem Joch 8 verbunden.

Zur drehfesten Verbindung können die beiden Bauteile 33, 34 stoffschlüssig und/oder formschlüssig und/oder kraftschlüssig mit dem Joch 8 verbunden sein. Beispielsweise kann die Verbindung durch Kleben, Löten, Schweißen, durch eine Steckverzahnung oder eine Passfeder oder durch Verpressen oder Aufschrumpfen erfolgen. Unter Aufschrumpfen werden auch solche Verfahren verstanden, bei denen die beiden Bauteile 33, 34 beispielsweise erwärmt werden, wobei sie sich ausdehnen, auf das Joch 8 aufgezogen werden, und beim Abkühlen die kraftschlüssige Verbindung mit dem Joch 8 eingehen. Ebenso werden solche Verfahren verstanden, bei denen die Bauteile 33, 34 mit Spiel auf das Joch 8 aufgezogen werden und unter Erwärmung eine auch bei Abkühlung dauerhafte Verringerung des Durchmessers erfahren, bis sie kraftschlüssig mit dem Joch 8 verbunden sind. Ferner besteht gleichermaßen die Möglichkeit, das Joch 8 durch Abkühlung zu schrumpfen, bis die beiden Bauteile 33, 34 auf das Joch 8 aufgezogen werden können. In diesem Fall entsteht die kraftschlüssige Verbindung, wenn das Joch 8 sich wieder auf die Ausgangstemperatur erwärmt.

Im dargestellten Ausführungsbeispiel weist das Joch 8 eine erste Jochhülse 8a und eine zweite Jochhülse 8b auf. Die beiden ringförmigen Bauteile 33, 34 sind drehfest auf die erste Jochhülse 8a aufgezogen. Die zweite Jochhülse 8b ist ebenfalls drehfest auf die erste Jochhülse 8a aufgezogen und stößt in axialer Richtung A an das zweite ringförmige Bauteil 34 an. In radialer Richtung R innerhalb der zweiten Jochhülse 8b ist das Stützlager 9, genauer gesagt ein Ausring des Stützlagers 9, in axialer Richtung A zwischen einem Kragen der zweiten Jochhülse 8b und einem Kragen der ersten Jochhülse 8a angeordnet. Im dargestellten Ausführungsbeispiel weisen beide Krägen in radialer Richtung R nach innen. Die zweite Jochhülse 8b ist insbesondere drehfest auf dem Außenring des Stützlagers 9 aufgezogen.

Obwohl dies nicht dargestellt ist, ist es auch möglich, dass eines der beiden ringförmigen Bauteile 33, 34 einteilig mit der Rotoreinrichtung 6 bzw. dem Joch 8 oder einer der beiden Jochhülsen 8a, 8b ausgebildet ist. Ebenso ist es möglich, dass das erste Bauteil 33 beispielsweise einteilig mit der ersten Jochhülse 8a ausgebildet ist, während das zweite Bauteil 34 beispielsweise einteilig mit der zweiten Jochhülse 8b ausgebildet ist. Auch in diesen nicht dargestellten Ausführungsformen sind die beiden Bauteile 33, 34 des Wälzkörperumlaufs 21 vorzugsweise als Ringe ausgebildet.

Zwischen den zwei Bauteilen 33, 34 des Wälzkörperumlaufs 21 ist eine Trennebene 35 definiert, die sich im Wesentlichen in radialer Richtung R erstreckt. Die Trennebene 35 kann bezüglich einer Radialebene, die von der Drehachse Z der Betätigungsvorrichtung 1 bzw. der Kupplung 2 senkrecht durchstoßen wird, geneigt sein. Ferner kann die Trennebene 35 der Windung einer Schraube folgend ausgebildet sein und eine oder mehrere Sprungstellen aufweisen.

Die Wälzkörper 22 laufen im Fettraum 27, der durch die Dichtungen 15, 16 in axialer Richtung A abgedichtet ist, und sind vorzugsweise als Kugeln ausgebildet. Jedoch ist es auch möglich, dass die Wälzkörper 22 als Nadeln ausgebildet sind bzw. eine Tonnen- oder Fassform aufweisen. Der Außenkontur der Wälzkörper 22 entsprechend weist die Formfeder 23 eine Anlagekontur 25 auf, an der Oberflächenbereiche der Wälzkörper 22 anliegen. Dabei entspricht die besagte Anlagekontur 25 im Wesentlichen dem entsprechenden Oberflächenbereich des bzw. der Wälzkörper 22. Im dargestellten Ausführungsbeispiel weisen die Windungen der Formfeder 23 zwei in axialer Richtung A voneinander beabstandete Anlagekonturen 25 auf, die durch einen dazwischen liegenden Kamm 26 voneinander getrennt sind. Die Formfeder 23 ist als innenkonturierte Formfeder 23 ausgebildet, da die Wälzkörper 22 in radialer Richtung R innerhalb der Formfeder 23 laufen. Dies ist insbesondere von Vorteil, wenn die beiden Bauteile 33, 34 des Wälzkörperumlaufs 21 die Wälzkörperrinne 28 in ihrem Außenumfang aufweisen und im Außenumfang der Rotoreinrichtung 6 bzw. des Jochs 8 angeordnet sind, während der Antrieb der Betätigungsvorrichtung 1 mittels eines Außenläufers erfolgt.

Der Wälzkörperumlauf 21, genauer gesagt die Wälzkörperrinne 28, weist einen derart ausgebildeten Spurwechselbereich 29 auf, dass die Wälzkörper 22 in Umfangsrichtung U vor dem Spurwechselbereich 29 in einem Tragbereich 30 der Wälzkörperrinne 28 und in axialer Richtung A zwischen einer ersten und einer zweiten Windung 24a, 24b der Formfeder 23 laufen, und die Wälzkörper 22 in Umfangsrichtung U nach dem Spurwechselbereich 29 im Tragbereich 30 der Wälzkörperrinne 28 und in axialer Richtung A zwischen der zweiten und einer dritten Windung 24b, 24c der Formfeder 23 laufen. Zwischen der ersten und zweiten Windung 24a, 24b der Formfeder 23 ist somit eine erste Spur für die Wälzkörper 22 in Umfangsrichtung U definiert, während zwischen der zweiten und dritten Windung 24b, 24c der Formfeder 23 eine zweite Spur für die Wälzkörper 22 in Umfangsrichtung U definiert ist. An dieser Stelle sei darauf hingewiesen, dass die erste Windung 24a, die zweite Windung 24b und die dritte Windung 24c drei aufeinander folgende Windungen der Formfeder 23 darstellen, die in axialer Richtung A an beliebiger Stelle der Formfeder 23 ausgebildet sein können.

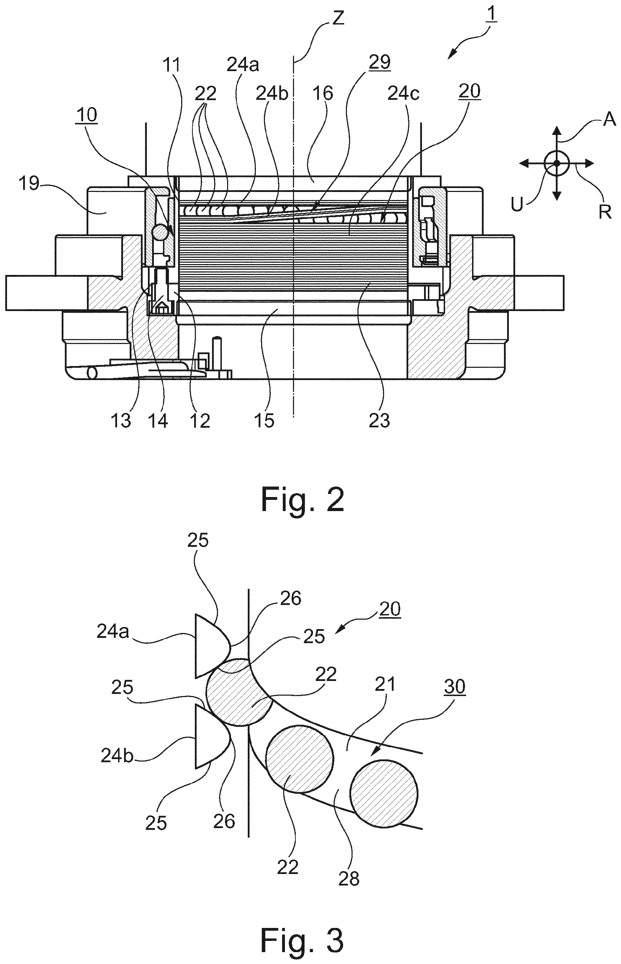

Wie dies in Figur 2 dargestellt ist, überkreuzt sich die zweite Windung 24b mit dem Spurwechselbereich 29, wenn man die Betätigungsvorrichtung 1 von der Seite betrachtet. Der Spurwechselbereich 29 weist in radialer Richtung R eine größere Tiefe als der Tragbereich 30 auf. Der Tragbereich 30 geht über einen Einlaufabschnitt 31 in den Spurwechselbereich 29 über, und der Spurwechselbereich 29 geht über einen Auslaufabschnitt 32 in den Tragbereich 30 über. Die Tiefe der Wälzkörperrinne 28 in radialer Richtung R vergrößert sich im Einlaufabschnitt 31 vom Tragbereich 30 zum Spurwechselbereich 29 kontinuierlich. Die Tiefe der Wälzkörperrinne 28 in radialer Richtung R verringert sich im Auslaufabschnitt 32 vom Spurwechselbereich 29 zum Tragbereich 30 kontinuierlich.

Der Tragbereich 30 ist im Wesentlichen schraubengewindeförmig ausgebildet. Die Steigung des Tragbereichs 30 entspricht im Wesentlichen der Steigung der Formfeder 23 in diesem Bereich, genauer gesagt der Steigung der Spur zwischen der ersten und zweiten Windung 24a, 24b und zwischen der zweiten und dritten Windung 24b, 24c.

Wie bereits zuvor erwähnt, sind die Wälzkörper 22 vorzugsweise als Kugeln ausgebildet. Die Wälzkörperrinne 28 ist als umlaufende Kugelrinne ausgebildet. Im Spurwechselbereich 29 ist dabei sicherzustellen, dass die Wälzkörper 22, das heißt die Kugeln, in radialer Richtung R unter dem Kamm 26 der zweiten Windung 24b der Formfeder 23 hindurchtauchen können, um den Spurwechsel von der einen Spur zwischen der ersten und zweiten Windung 24a, 24b zur anderen Spur zwischen der zweiten und dritten Windung 24b, 24c zu vollziehen. Hierzu ist es von Vorteil, wenn die Tiefe des Spurwechselbereichs 29 im Wesentlichen gleich dem Durchmesser der Kugeln ist. Vorzugsweise ist die Tiefe des Spurwechselbereichs 29 größer als der Durchmesser der Kugeln, damit diese vollständig in die Kugelrinne eintauchen können und den Kamm 26 der zweiten Windung 24b der Formfeder 23 mit Sicherheit nicht berühren.

Die Trennebene 35 verläuft durch die Wälzkörperrinne 28, genauer gesagt durch die gesamte Wälzkörperrinne 28. Insbesondere verläuft die Trennebene 35 in axialer Richtung A mittig durch den Spurwechselbereich 29 der Wälzkörperrinne 28 und den Tragbereich 30 der Wälzkörperrinne 28. Es ist von Vorteil, wenn die zwei Bauteile 33, 34 des Wälzkörperumlaufs 21 und insbesondere die Wälzkörperrinne 28 umformtechnisch, insbesondere werkzeugfallend, hergestellt sind.

Im Betrieb der Betätigungsvorrichtung 1 führt eine Drehung der Rotoreinrichtung 6 durch entsprechende Bestromung der Statoreinrichtung 4 zu einer Drehung der Wälzkörperumlaufs 21. Die Wälzkörper 22 durchlaufen innerhalb des Wälzkörpergewindetriebs 20 die Spuren zwischen der ersten und zweiten Windung 24a, 24b der Formfeder 23 und zwischen der zweiten und dritten Windung 24b, 24c der Formfeder 23, wodurch sich die Spuren in axialer Richtung A bewegen, und die rotatorische Bewegung der Rotoreinrichtung 6 in eine translatorische Bewegung der Schlitteneinrichtung 10, in der die Formfeder 23 axialfest gelagert ist, umgesetzt wird. Die translatorische Bewegung der Schlitteneinrichtung 10 kann zur mittelbaren oder unmittelbaren Betätigung der Kupplung 2 verwendet werden.

Da der Wälzkörpergewindetrieb 20 vorzugsweise selbsthemmend ausgebildet ist, ist eine Bestromung der Statoreinrichtung 4 vorzugsweise lediglich erforderlich, wenn der Betriebszustand der Kupplung 2 zu ändern ist. Die Bestromung kann in beide Drehrichtungen der Rotoreinrichtung 6 erfolgen, wobei in einer Drehrichtung die Kupplung 2 eingerückt wird, und in der entgegengesetzten Drehrichtung die Kupplung 2 ausgerückt wird. Bei einer mitdrehenden Statoreinrichtung 4 sind jedoch auch andere Arten der Bestromung möglich.

Mit Bezug auf die in den Figuren 7 und 8 dargestellten ersten und zweiten Bauteile 33, 34 des zweiten Ausführungsbeispiels des Wälzkörperumlaufs 21 wird lediglich auf die Unterschiede zum ersten Ausführungsbeispiel des Wälzkörperumlaufs 21 eingegangen. Gleiche Bezugszeichen betreffen gleiche Merkmale bzw. Merkmale mit gleicher Funktion.

Der Wälzkörperumlauf 21 ist in diesem Ausführungsbeispiel für den Antrieb der Betätigungsvorrichtung mittels eines Innenläufers vorgesehen, wobei der Wälzkörperumlauf 21 im Innenumfang der Rotoreinrichtung 6 bzw. des Jochs 8 angeordnet ist. Dementsprechend weisen die beiden Bauteile 33, 34 des Wälzkörperumlaufs 21 eine Wälzkörperrinne 28 auf, die im Innenumfang der beiden ringförmig ausgebildeten Bauteile 33, 34 angeordnet ist. In dieser Wälzkörperrinne 28 laufen die Wälzkörper 22 und sind mit einer außenkontuierten Formfeder 23 in Anlage, das heißt mit einer Formfeder 23, deren Anlagekonturen 25 und deren Kamm 26 in radialer Richtung R nach außen weisen. Besagte Formfeder 23 ist in radialer Richtung R innerhalb der ringförmigen Bauteile 33, 34 des Wälzkörperumlaufs 21 angeordnet.

Die vorangegangenen Ausführungsbeispiele betreffen eine Betätigungsvorrichtung 1 für eine Kupplung 2 mit einer Statoreinrichtung 4, einer bezüglich der Statoreinrichtung 4 verdrehbaren Rotoreinrichtung 6 und einer bezüglich der Rotoreinrichtung 6 in axialer Richtung A begrenzt verlagerbaren Schlitteneinrichtung 10, wobei zwischen der Rotoreinrichtung 6 und der Schlitteneinrichtung 10 ein Wälzkörpergewindetrieb 20 mit zumindest drei Windungen 24a, 24b, 24c und einem im Wesentlichen ringförmigen Wälzkörperumlauf 21 mit Wälzkörpern 22 vorgesehen ist, wobei der im Wesentlichen ringförmige Wälzköperumlauf 21 einen derart ausgebildeten Spurwechselbereich 29 aufweist, dass Wälzkörper 22 in Umfangsrichtung U vor dem Spurwechselbereich 29 zwischen einer ersten und einer zweiten Windung 24a, 24b laufen, und Wälzkörper 22 in Umfangsrichtung U nach dem Spurwechselbereich 29 zwischen der zweiten und einer dritten Windung 24b, 24c laufen, wobei der im Wesentlichen ringförmige Wälzkörperumlauf 21 aus zumindest zwei Bauteilen 33, 34 ausgebildet ist.

### Bezugszeichenliste

- 1: Betätigungsvorrichtung
- 2: Kupplung
- 3: Hebelelement
- 4: Statoreinrichtung
- 5: Stromzufuhr
- 6: Rotoreinrichtung
- 7: Magnet
- 8: Joch
- 8a: erste Jochhülse
- 8b: zweite Jochhülse
- 9: Stützlager
- 10: Schlitteneinrichtung
- 11: Außenhülse
- 12: Deckel
- 13: Ausgleichsscheibe
- 14: Schraube
- 15: erste Dichtung
- 16: zweite Dichtung
- 17: erste Innenhülse
- 18: zweite Innenhülse
- 19: Ausrücklager
- 20: Wälzkörpergewindetrieb
- 21: Wälzkörperumlauf
- 22: Wälzkörper
- 23: Formfeder
- 24a: erste Windung
- 24b: zweite Windung
- 24c: dritte Windung
- 25: Anlagekontur
- 26: Kamm
- 27: Fettraum
- 28: Wälzkörperrinne
- 29: Spurwechselbereich
- 30: Tragbereich
- 31: Einlaufabschnitt
- 32: Auslaufabschnitt
- 33: erstes Bauteil
- 34: zweites Bauteil
- 35: Trennebene
- A: axiale Richtung
- R: radiale Richtung
- U: Umfangsrichtung
- Z: Drehachse

## Patentansprüche

1. Betätigungsvorrichtung (1) für eine Kupplung (2) mit:
einer Statoreinrichtung (4),
einer bezüglich der Statoreinrichtung (4) verdrehbaren Rotoreinrichtung (6), und
einer bezüglich der Rotoreinrichtung (6) in axialer Richtung (A) begrenzt verlagerbaren Schlitteneinrichtung (10), und
einen zwischen der Rotoreinrichtung (6) und der Schlitteneinrichtung (10) vorgesehenen Wälzkörpergewindetrieb (20) mit zumindest drei Windungen (24a, 24b, 24c) und einem im Wesentlichen ringförmigen Wälzkörperumlauf (21) mit Wälzkörpern 22), wobei
der im Wesentlichen ringförmige Wälzkörperumlauf (21) einen derart ausgebildeten Spurwechselbereich (29) aufweist, dass Wälzkörper (22) in Umfangsrichtung (U) vor dem Spurwechselbereich (29) zwischen einer ersten und einer zweiten Windung (24a, 24b) laufen, und Wälzkörper (22) in Umfangsrichtung (U) nach dem Spurwechselbereich (29) zwischen der zweiten und einer dritten Windung (24b, 24c) laufen, und
der im Wesentlichen ringförmige Wälzkörperumlauf (21) aus zumindest zwei Bauteilen (33, 34) ausgebildet ist,
**dadurch gekennzeichnet, dass**
die zumindest zwei Bauteile (33, 34) des Wälzkörperumlaufs (21) als Ringe ausgebildet sind.

2. Betätigungsvorrichtung (1) nach Anspruch , wobei zwischen den zumindest zwei Bauteilen (33, 34) des Wälzkörperumlaufs (21) eine Trennebene (35) definiert ist, die sich im Wesentlichen in radialer Richtung (R) erstreckt.

3. Betätigungsvorrichtung (1) nach Anspruch 1 oder 2, wobei der Wälzkörperumlauf (21) eine in Umfangsrichtung (U) umlaufende Wälzkörperrinne (28) aufweist.

4. Betätigungsvorrichtung (1) nach Anspruch 3, wobei die Trennebene (35) durch die Wälzkörperrinne (28) und vorzugsweise durch die gesamte Wälzkörperrinne (28) verläuft.

5. Betätigungsvorrichtung (1) nach Anspruch 3 oder 4, wobei die Wälzkörperrinne (28) den Spurwechselbereich (29) und zumindest einen im Wesentlichen schraubengewindeförmigen Tragbereich (30) aufweist.

6. Betätigungsvorrichtung (1) nach Anspruch 5, wobei die Trennebene (35) in axialer Richtung (A) mittig durch den Spurwechselbereich (29) der Wälzkörperrinne (28) und den Tragbereich (30) der Wälzkörperrinne (28) verläuft.

7. Betätigungsvorrichtung (1) nach einem der Ansprüche 3 bis 6, wobei die zumindest zwei Bauteile (33, 34) des Wälzkörperumlaufs (21) und vorzugsweise die Wälzkörperrinne (28) umformtechnisch hergestellt sind.

8. Betätigungsvorrichtung (1) nach einem der Ansprüche 3 bis 7, wobei die Wälzkörper (22) als Kugeln ausgebildet sind, und die Wälzkörperrinne (28) als umlaufende Kugelrinne ausgebildet ist.

9. Betätigungsvorrichtung (1) nach Anspruch 8, wobei die Tiefe des Spurwechselbereichs (29) im Wesentlichen gleich dem oder vorzugsweise größer als der Durchmesser der Kugeln ist.

## Claims

1. Actuating apparatus (1) for a clutch (2) having:
a stator device (4),
a rotor device (6) which can be rotated with regard to the stator device (4), and
a carriage device (10) which can be moved to a limited extent in the axial direction (A) with regard to the rotor device (6), and
a rolling-body screw drive (20) which is provided between the rotor device (6) and the carriage device (10) with at least three windings (24a, 24b, 24c) and a substantially annular recirculating rolling-body means (21) with rolling bodies (22),
the substantially annular recirculating rolling-body means (21) having a track change region (29) which is configured in such a way that rolling bodies (22) run between a first and a second winding (24a, 24b) before the track change region (29) in the circumferential direction (U), and rolling bodies (22) run between the second and a third winding (24b, 24c) after the track change region (29) in the circumferential direction (U), and
the substantially annular recirculating rolling-body means (21) being configured from at least two components (33, 34),
**characterized in that**
the at least two components (33, 34) of the recirculating rolling-body means (21) are configured as rings.

2. Actuating apparatus (1) according to Claim, a dividing plane (35) which extends substantially in the radial direction (R) being defined between the at least two components (33, 34) of the recirculating rolling-body means (21).

3. Actuating apparatus (1) according to Claim 1 or 2, the recirculating rolling-body means (21) having a rolling-body channel (28) which circulates in the circumferential direction (U).

4. Actuating apparatus (1) according to Claim 3, the dividing plane (35) running through the rolling-body channel (28) and preferably through the entire rolling-body channel (28).

5. Actuating apparatus (1) according to Claim 3 or 4, the rolling-body channel (28) having the track change region (29) and at least one substantially screw thread-shaped load-bearing region (30).

6. Actuating apparatus (1) according to Claim 5, the dividing plane (35) running in the axial direction (A) centrally through the track change region (29) of the rolling-body channel (28) and the load-bearing region (30) of the rolling-body channel (28).

7. Actuating apparatus (1) according to one of Claims 3 to 6, the at least two components (33, 34) of the recirculating rolling-body means (21) and preferably the rolling-body channel (28) being produced using forming technology.

8. Actuating apparatus (1) according to one of Claims 3 to 7, the rolling bodies (22) being configured as balls, and the rolling-body channel (28) being configured as a circulating ball channel.

9. Actuating apparatus (1) according to Claim 8, the depth of the track change region (29) being substantially equal to or preferably greater than the diameter of the balls.

## Revendications

1. Dispositif d'actionnement (1) pour un embrayage (2), le dispositif d'actionnement comprenant :
un dispositif stator (4),
un dispositif rotor (6) pouvant tourner par rapport au dispositif stator (4), et
un dispositif chariot (10) déplaçable de manière limitée dans la direction axiale (A) par rapport au dispositif rotor (6), et
une vis d'entraînement à corps de roulement (20) prévue entre le dispositif rotor (6) et le dispositif chariot (10) et dotée d'au moins trois spires (24a, 24b, 24c) et d'un circuit de corps de roulement (21) sensiblement annulaire doté de corps de roulement (22),
le circuit de corps de roulement (21) sensiblement annulaire comprenant une zone de changement de piste (29) formée de telle sorte que les corps de roulement (22) circulent entre une première et une deuxième spire (24a, 24b) avant la zone de changement de piste (29) dans la direction périphérique (U), et que les corps de roulement (22) circulent entre la deuxième et une troisième spire (24b, 24c) après la zone de changement de piste (29) dans la direction périphérique (U), et
le circuit de corps de roulement (21) sensiblement annulaire étant formé à partir d'au moins deux composants (33, 34),
**caractérisé en ce que**
lesdits au moins deux composants (33, 34) du circuit de corps de roulement (21) sont réalisés sous forme de bagues.

2. Dispositif d'actionnement (1) selon la revendication, dans lequel un plan de séparation (35) est défini entre lesdits au moins deux composants (33, 34) du circuit de corps de roulement (21), lequel plan de séparation s'étend sensiblement dans la direction radiale (R).

3. Dispositif d'actionnement (1) selon la revendication 1 ou 2, dans lequel le circuit de corps de roulement (21) comprend une gorge à corps de roulement (28) s'étendant dans la direction périphérique (U).

4. Dispositif d'actionnement (1) selon la revendication 3, dans lequel le plan de séparation (35) passe par la gorge à corps de roulement (28) et de préférence par l'ensemble de la gorge à corps de roulement (28).

5. Dispositif d'actionnement (1) selon la revendication 3 ou 4, dans lequel la gorge à corps de roulement (28) comprend la zone de changement de piste (29) et au moins une zone de support (30) sensiblement en forme de filetage de vis.

6. Dispositif d'actionnement (1) selon la revendication 5, dans lequel le plan de séparation (35) passe centralement par la zone de changement de piste (29) de la gorge à corps de roulement (28) et par la zone de support (30) de la gorge à corps de roulement (28) dans la direction axiale (A).

7. Dispositif d'actionnement (1) selon l'une quelconque des revendications 3 à 6, dans lequel lesdits au moins deux composants (33, 34) du circuit de corps de roulement (21) et de préférence la gorge à corps de roulement (28) sont fabriqués par une technique de déformation.

8. Dispositif d'actionnement (1) selon l'une quelconque des revendications 3 à 7, dans lequel les corps de roulement (22) sont réalisés sous forme de billes, et la gorge à corps de roulement (28) est réalisée sous forme de gorge à billes périphérique.

9. Dispositif d'actionnement (1) selon la revendication 8, dans lequel la profondeur de la zone de changement de piste (29) est sensiblement identique ou de préférence supérieure au diamètre des billes.
